# EUROPEAN PATENT APPLICATION

(11) **EP 2 148 043 A2**
(43) Date of publication of application: **27.01.2010**
(21) Application number: 09164972.3
(22) Date of filing: 08.07.2009
(51) Int. Cl.: F01D 17/14, F01D 25/24, F02C 6/12

(54) **Sliding variable-geometry turbocharger with insert in the turbine housing bore**

(30) Priority: 24.07.2008 US 179309
(71) Applicant: Honeywell International Inc., Morristown, NJ 07962 (US)
(72) Inventor: Bouvier, Emmanuel, 88000, Epinal (FR); Sausse, Lorrain, 88130, Charmes (FR); Barthelet, Pierre, Thaon Les Vosges (FR); Marques, Manuel, FX 54630, Moselle (FR); Vautier, Laurent, Thaon Les Vosges (FR); Abel, Francis, Thaon Les Vosges (FR); Claudon, Alain, Thaon Les Vosges (FR)
(74) Representative: Buckley, Guy Julian

(57) **Abstract**

A turbocharger includes a thin-walled insert installed in the bore of the turbine housing. The insert is generally ring-shaped and is radially resilient. The insert can be made of sheet metal formed into a ring shape, and in some embodiments is a split ring. A piston is axially slidable in the bore for varying the size of the turbine nozzle. The outer surface of the piston slides against the inner surface of the insert, and in preferred embodiments a piston ring that encircles the piston engages the inner surface of the insert to substantially seal the interface between the insert and the piston.

## Description

### (FEDERALLY SPONSORED RESEARCH OR DEVELOPMENT)

This invention was made with United States Government support under DOE Contract No. DE-FC26-06NT42873 awarded by U.S. Department of Energy. The United States Government has certain rights in the invention.

### BACKGROUND OF THE INVENTION

The present invention relates generally to turbochargers, and relates more particularly to exhaust gas-driven turbochargers having an axially sliding piston for varying the size of a nozzle opening leading into the turbine wheel of the turbine so as to regulate flow through the turbine.

Regulation of the exhaust gas flow through the turbine of an exhaust gas-driven turbocharger provides known operational advantages in terms of improved ability to control the amount of boost delivered by the turbocharger to the associated internal combustion engine. The regulation of exhaust gas flow is accomplished by incorporating variable geometry into the nozzle that leads into the turbine wheel. By varying the size of the nozzle flow area, the flow into the turbine wheel can be regulated, thereby regulating the overall boost provided by the turbocharger's compressor.

Variable-geometry nozzles for turbochargers generally fall into two main categories: variable-vane nozzles, and sliding-piston nozzles. Vanes are often included in the turbine nozzle for directing the exhaust gas into the turbine in an advantageous direction. Typically a row of circumferentially spaced vanes extend axially across the nozzle. Exhaust gas from a chamber surrounding the turbine wheel flows generally radially inwardly through passages between the vanes, and the vanes turn the flow to direct the flow in a desired direction into the turbine wheel. In a variable-vane nozzle, the vanes are rotatable about their axes to vary the angle at which the vanes are set, thereby varying the flow area of the passages between the vanes.

In the sliding-piston type of nozzle, the nozzle may also include vanes, but the vanes are fixed in position. Variation of the nozzle flow area is accomplished by an axially sliding piston that slides in a bore in the turbine housing. The piston is tubular and is located just radially inwardly of the nozzle. Axial movement of the piston is effective to vary the axial extent of the nozzle opening leading into the turbine wheel. When vanes are included in the nozzle, the piston can slide adjacent to radially inner (i.e., trailing) edges of the vanes; alternatively, the piston and vanes can overlap in the radial direction and the piston can include slots for receiving at least a portion of the vanes as the piston is slid axially to adjust the nozzle opening.

The sliding-piston type of variable nozzle offers the advantage of being mechanically simpler than the variable-vane nozzle. Nevertheless, other drawbacks have generally been associated with sliding-piston type variable nozzles. In many cases a linkage coupled to the piston for effecting axial movement of the piston has been disposed in the exhaust gas flow stream exiting the turbine. For example, the downstream end of the piston has often been attached to arms that connect to a control rod of an actuator located adjacent an exterior side of the turbine housing directly behind the piston. The control rods penetrates through an opening in the turbine housing. The presence of the control rod and arms in the flow stream deleteriously affects the flow of the exhaust gas, which impairs turbocharger performance.

Another disadvantage of some sliding-piston type variable nozzles is that the sliding piston directly engages the inner surface of the bore in the turbine housing. The turbine housing typically is cast, and the as-cast surface of the bore is not dimensionally accurate enough and smooth enough to ensure good sealing between the piston and bore. Consequently, the bore must be machined to precise dimensional tolerances to ensure proper sealing. The bore is relatively large, and thus a significant amount of precision machining must be performed.

Even with precise machining of the turbine housing bore, adequate sealing between the piston and the bore is difficult to achieve under all conditions, because the inside diameter of the bore undergoes thermally induced deformation as the temperature of the turbine housing changes during operation. Furthermore, the piston and turbine housing tend to thermally deform by different amounts.

### BRIEF SUMMARY OF THE DISCLOSURE

The present disclosure concerns a turbocharger that includes a thin-walled insert installed in the bore of the turbine housing. The insert is generally ring-shaped and is radially resilient. The outer surface of the piston slides against the inner surface of the insert, and in preferred embodiments a piston ring that encircles the piston engages the inner surface of the insert to substantially seal the interface between the insert and the piston. The insert can be made of sheet metal formed into a ring shape. Because the insert (rather than the turbine housing bore) defines the surface for sealing with the piston, precise machining of the bore is not necessary, and if desired the inner surface of the bore can be as cast.

In some embodiments, the bore of the turbine housing defines a circumferential or annular groove of slightly greater diameter than the adjacent portions of the bore. At least part of the insert is disposed in the groove to restrain axial movement of the insert.

In some embodiments, the axial length of the groove is sufficient to receive the full axial length of the insert in the groove. The groove has at least one end wall that engages one side of the insert. In one embodiment, the other side of the insert is engaged by at least one retainer formed separately from the turbine housing and releasably affixed to the turbine housing. The retainer can comprise a bolt or pin installed in a hole in the turbine housing. The bolt or pin has an enlarged head or a washer (either separately formed from or integrally formed with the bolt or pin) that engages the other side of the insert to restrain its axial movement.

In another embodiment, the turbine housing bore itself defines a second end wall facing axially toward the first end wall and spaced therefrom by the axial length of the insert. The two end walls engage the opposite sides of the insert to restrain axial movement thereof.

In one embodiment, the insert comprises a split ring such that the insert is resiliently contractible and expandable in diameter. In a relaxed state, the insert has a greater outside diameter than the groove. The insert is slightly compressed in diameter to install it in the groove, and then the insert springs back toward its relaxed diameter such that it is continually urged against the bottom surface of the groove. In one embodiment, the split in the ring is straight and oriented either parallel or non-parallel to the axial direction.

In other embodiments the split is zigzagged, crenellated, or wavy. These designs of the split improve the sealing between the piston ring and the insert by minimizing the size of the potential leakage pathway caused by the split.

The split ring can be formed such that in its relaxed state the two ends of the split ring are axially offset from each other by a small amount such that the axial length of the split ring exceeds the axial length of the groove. Thus when the insert is installed into the groove, the ends of the split ring are axially compressed between the end walls of the groove, which helps to maintain the insert in proper position in the groove.

The insert can include a radially outwardly projecting flange at one axial end of the insert, and the groove can be sized to receive the flange while the remainder of the insert is outside the groove. The insert can also include a radially inwardly projecting flange at its opposite end. The flanges enhance the hoop stiffness of the insert to resist deformations that would tend to cause the insert to become non-circular in shape.

### BRIEF DESCRIPTION OF THE SEVERAL VIEWS OF THE DRAWING(S)

Having thus described the disclosure in general terms, reference will now be made to the accompanying drawings, which are not necessarily drawn to scale, and wherein:

FIG. 1 is a cross-sectional view of a turbocharger in accordance with a first embodiment of the invention;

FIG. 2 is magnified portion of FIG. 1;

FIG. 3A is a side view of an insert in accordance with one embodiment of the invention;

FIG. 3B is a cross-sectional view of the insert of FIG. 3A;

FIG. 4A is a side view of an insert in accordance with another embodiment of the invention;

FIG. 4B is a cross-sectional view of the insert of FIG. 4A;

FIG. 5A is a side view of an insert in accordance with a further embodiment of the invention;

FIG. 5B is a cross-sectional view of the insert of FIG. 5A;

FIG. 6A is a side view of an insert in accordance with still another embodiment of the invention;

FIG. 6B is a cross-sectional view of the insert of FIG. 6A;

FIG. 7 is a cross-sectional view of a turbine housing and insert in accordance with another embodiment of the invention; and

FIG. 8 is a magnified portion of FIG. 7.

### DETAILED DESCRIPTION OF THE DRAWINGS

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

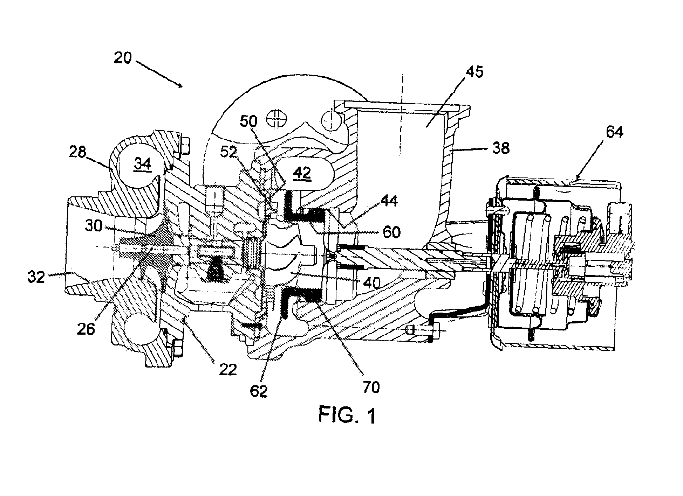

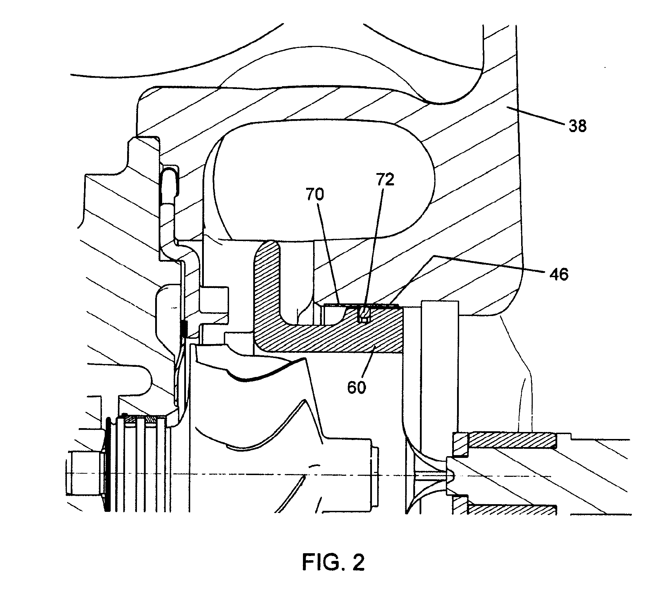

With reference to FIGS. 1 and 2, a cross-sectional view of a turbocharger **20** having a sliding piston in accordance with a first embodiment of the invention is illustrated. The turbocharger includes a center housing **22** that contains bearings (not shown) for a rotary shaft **26** of the turbocharger. A compressor housing **28** is coupled to one side of the center housing. A compressor wheel **30** is mounted on one end of the shaft **26** and is disposed in the compressor housing. The compressor housing defines an inlet **32** through which air is drawn into the compressor wheel **30,** which compresses the air, and further defines a diffuser through which the compressed air is discharged from the compressor wheel into a volute **34** surrounding the compressor wheel. From the volute, the air is delivered to the intake of an internal combustion engine (not shown).

The turbocharger further comprises a turbine housing **38** coupled to the opposite side of the center housing **22.** A turbine wheel **40** is mounted on the opposite end of the shaft **26** from the compressor wheel and is disposed in the turbine housing. The turbine housing defines a chamber **42** that surrounds the turbine wheel **40** and receives exhaust gas from the internal combustion engine. Exhaust gas is directed from the chamber **42** into the turbine wheel **40,** which expands the exhaust gas and is driven thereby so as to drive the compressor wheel.

The turbine housing **38** defines a generally cylindrical bore **44** disposed generally radially inwardly of the chamber **42.** The turbine wheel **40** resides in an upstream end of the bore **44** and the turbine wheel's rotational axis is substantially coaxial with the bore. The term "upstream" in this context refers to the direction of exhaust gas flow through the bore **44,** as the exhaust gas in the chamber **42** flows into the turbine wheel **40** and is then turned to flow generally axially (left to right in FIG. 1) through the bore **44,** and is then discharged through a discharge conduit **45.**

The turbocharger further comprises a piston **60** of generally tubular form. The piston is coaxially disposed within the bore **44** and is slidable in the axial direction. The piston is slidable between a closed position, a partially open position, and an open position. When the piston is closed, exhaust gas can flow from the chamber **42** radially inwardly through a nozzle defined between a wall **50** and an end or flange **62** of the piston, and into the turbine wheel **40.** In some turbochargers, vanes **52** extend at least partway across the nozzle for guiding the flow through the nozzle. When the piston is moved toward the open position, the axial extent of the nozzle increases to allow more flow into the turbine wheel; conversely, when the piston is moved toward the closed position, the axial extent of the nozzle decreases to allow less flow into the turbine wheel. The piston can be actuated by any of various actuator mechanisms, one example of which is an "in-line" actuator **64** such as shown in FIG. 1.

As previously noted, the turbine housing **38** typically is cast and thus does not have precise dimensional tolerances on the bore **44.** The as-cast surface of the bore **44** is also not very smooth. Accordingly, in order to provide a smooth, dimensionally accurate surface for engagement by the piston **60,** in accordance with the invention an insert **70** is installed in the bore **44** of the turbine housing. The insert **70** is a thin-walled ring-shaped structure, which advantageously can be made of sheet metal. The wall thickness of the insert **70,** measured in the radial direction between the inner and outer surfaces of the insert, can range from about 0.2 mm to about 1 mm. The radially inner surface of the insert **70** forms the surface that is engaged by the piston **60** as the piston slides back and forth. A sealing ring **72** is retained in a groove in the outer surface of the piston for engaging the inner surface of the insert **70** in order to seal the interface therebetween so that exhaust gas is substantially prevented from leaking between the piston and the insert.

In accordance with the invention, the turbine housing bore **44** includes a groove **46** for retaining the insert **70.** The groove's bottom surface is generally cylindrical and is of slightly greater diameter than the adjacent portions of the bore **44.** The groove has at least one axially facing end wall that delimits at least one end of the groove's axial length. The insert **70** is disposed in the groove, and the end wall engages the insert to restrain axial movement of the insert. The groove **46** in some embodiments of the invention can be sized in diameter such that there is a slight radial clearance between the insert and the bottom wall of the groove, which can provide mechanical and thermal decoupling between the insert and the turbine housing. In other embodiments, there is substantially no such radial clearance.

As noted, an end wall of the groove **46** engages one side of the insert **70.** In one embodiment, the other side of the insert is engaged by at least one retainer (not shown) formed separately from the turbine housing and releasably affixed to the turbine housing. The retainer can comprise a bolt or pin installed in a hole in the turbine housing. The bolt or pin has an enlarged head or a washer (either separately formed from or integrally formed with the bolt or pin) that engages the other side of the insert to restrain its axial movement.

In another embodiment as shown in FIGS. 1 and 2, the groove **46** itself defines a second end wall facing axially toward the first end wall and spaced therefrom by the axial length of the insert **70.** The two end walls engage the opposite sides of the insert to restrain axial movement thereof.

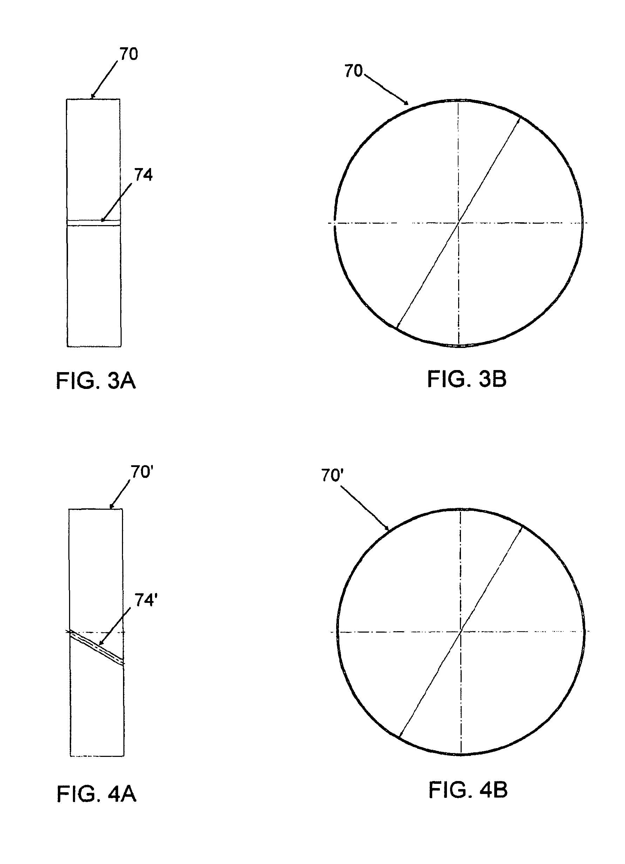

The insert **70** can be of various configurations. In one embodiment as shown in FIGS. 3A and 3B, the insert **70** comprises a split ring such that the insert is resiliently contractible and expandable in diameter. In a relaxed state, the insert has a greater outside diameter than the groove **46.** The insert is slightly compressed in diameter to install it in the groove, and a restoring spring force of the split ring urges the split ring radially outwardly against the bottom surface of the groove, whereby the radial clearance between the insert and the groove is substantially zero.

In the embodiment of FIGS. 3A and 3B, the split **74** in the ring is straight and oriented parallel to the axial direction. In an alternative embodiment as shown in FIGS. 4A and 4B, an insert **70'** has a split **74'** that is straight and oriented non-parallel to the axial direction.

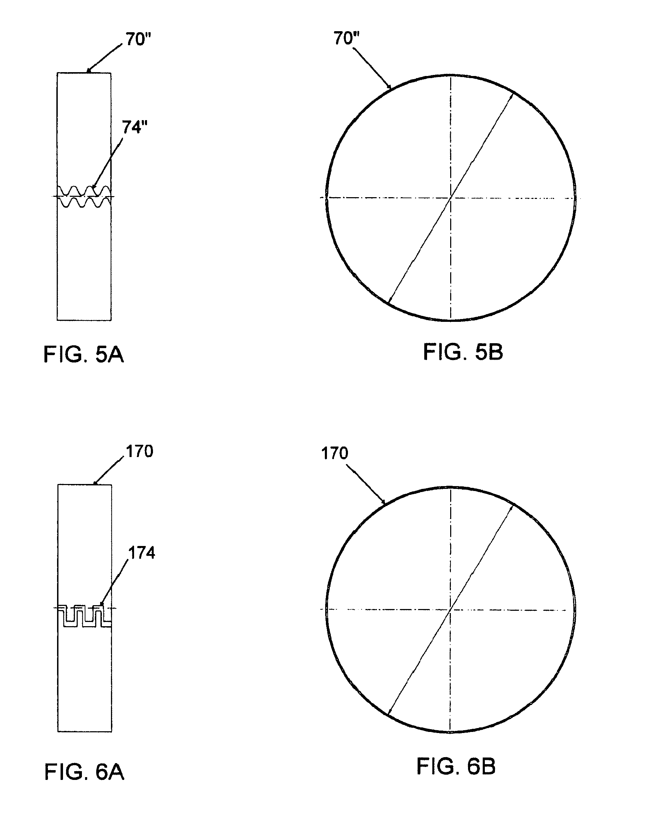

Various other configurations of the split are possible. For example, FIGS. 5A and 5B illustrate a further alternative insert **70"** that has a "wavy" or zigzag-shaped split **74".** FIGS. 6A and 6B depict a still further alternative insert **170** having a crenellated split **174.** These split configurations are thought to be advantageous in terms of reducing leakage of exhaust gas through the pathway formed by the split.

Any of the split ring inserts **70, 70', 70"** can be formed such that in its relaxed state the two ends of the split ring are axially offset from each other by a small amount so that the axial length of the split ring exceeds the axial length of the groove **46** in the turbine housing. Thus, when the insert is installed into the groove, the ends of the split ring are axially compressed between the end walls of the groove, which helps to maintain the insert in proper position in the groove.

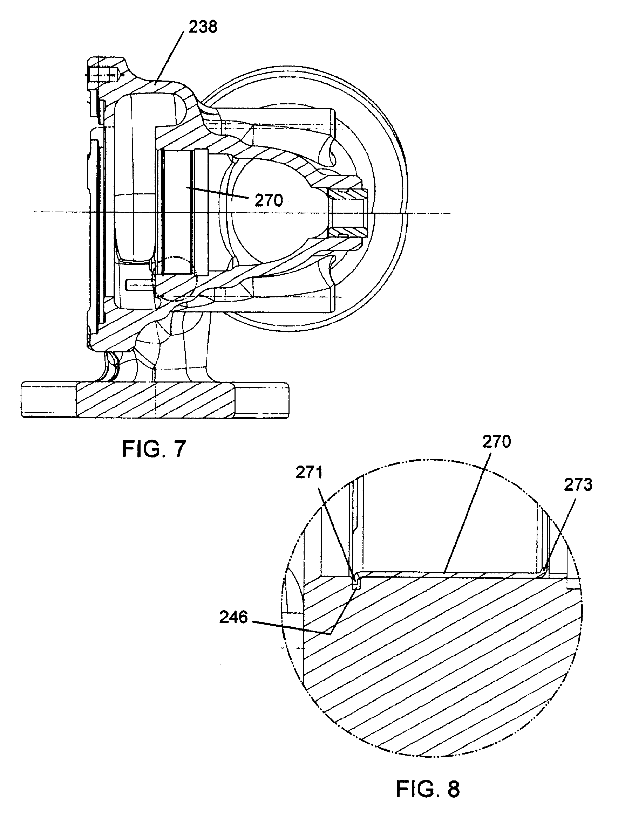

FIGS. 7 and 8 illustrate yet another embodiment of the invention. In this embodiment, the turbine housing **238** defines a circumferential groove **246** that has a substantially smaller axial length than that of the insert **270.** The insert **270** has a radially outwardly projecting ring or flange **271** at one axial end of the insert. The flange **271** is engaged in the groove **246** in such a manner that the insert is retained by the groove and is substantially fixed against axial movement as the piston slides back and forth. The flange **271,** in addition to serving the function of fixing the insert in position, also enhances the "hoop" stiffness of the insert so as to better maintain the circularity of the insert. The insert can also include a similar flange **273** at its opposite axial end, for further enhancing the hoop stiffness of the insert. The flange **273,** however, projects radially inwardly rather than outwardly.

The flanges **271, 273** can each extend continuously a full 360°. Alternatively, one of both of the flanges can extend for less than a full 360°. In some embodiments, one or both of the flanges can be formed as a plurality of circumferentially spaced flange segments each occupying less than 180° of arc. It should also be noted that both flanges **271, 273** are not essential, and in particular the radially inwardly projecting flange **273** can be omitted if it is not needed for stiffening.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A turbocharger comprising:
a compressor wheel affixed to one end of a shaft and disposed in a compressor housing;
a center housing having one side coupled to the compressor housing, the shaft passing through the center housing;
a turbine wheel affixed to an opposite end of the shaft and disposed in a bore of a turbine housing that is coupled to an opposite side of the center housing, the turbine housing defining a chamber surrounding the turbine wheel for receiving exhaust gas, and a nozzle through which the exhaust gas is directed into the turbine wheel;
an insert formed separately from the turbine housing and disposed in the bore of the turbine housing with a radially outer surface of the insert engaging an inner surface of the bore, the insert having a generally cylindrical inner surface, wherein the insert comprises a radially resilient ring formed of sheet metal; and
a tubular piston disposed in the bore such that the piston is slidable along an axial direction substantially parallel to a rotational axis of the turbine wheel for varying an effective size of the nozzle, wherein a radially outer surface of the piston slides against the inner surface of the insert.

2. The turbocharger of claim 1, wherein the inner surface of the bore in the turbine housing defines a circumferential groove, and at least part of the insert is disposed in the groove such that the insert is restrained by the groove against axial movement of the insert.

3. The turbocharger of claim 2, wherein the insert defines a flange that projects radially outwardly from one axial end of the insert, the flange being received in the groove while the remainder of the insert is outside the groove.

4. The turbocharger of claim 3, wherein an opposite axial end of the insert defines a radially inwardly projecting flange, the two flanges serving to enhance hoop stiffness of the insert.

5. The turbocharger of claim 2, wherein the groove has an axial length sufficient to receive a full axial length of the insert in the groove.

6. The turbocharger of claim 2, wherein the insert comprises a split ring having opposite ends that are proximate to and circumferentially spaced from each other, the split ring being radially inwardly compressed by the turbine housing such that a restoring spring force of the split ring urges the split ring radially outwardly against a surface of the turbine housing.

7. The turbocharger of claim 6, wherein the groove has a first end wall at one axial end of the groove and a second end wall at an opposite axial end of the groove, and wherein the insert is retained between the first and second end walls.

8. The turbocharger of claim 7, wherein in a relaxed condition of the split ring the opposite ends thereof are axially offset relative to each other such that an axial length of the split ring exceeds an axial length of the groove, and such that the split ring is axially compressed between the first and second end walls of the groove.

9. The turbocharger of claim 6, wherein the split ring has a split oriented substantially parallel to the axial direction.

10. The turbocharger of claim 6, wherein the split ring has a split oriented at an acute angle to the axial direction.

11. The turbocharger of claim 6, wherein the split ring has a split that is crenellated.

12. The turbocharger of claim 6, wherein the split ring has a split that is wavy.

13. The turbocharger of claim 1, wherein the piston includes a sealing ring encircling the outer surface of the piston and retained in a groove formed in the outer surface, the piston ring contacting the inner surface of the insert for substantially sealing an interface between the piston and the insert.
